# EUROPEAN PATENT APPLICATION

(11) **EP 4 687 204 A1**
(43) Date of publication of application: **04.02.2026**
(21) Application number: 25186386.6
(22) Date of filing: 30.06.2025
(51) Int. Cl.: H01M 50/209, H01M 50/242, H01M 50/244, H01M 50/291

(54) **CELL MODULE, BATTERY PACK AND METHOD FOR ASSEMBLING BATTERY PACK, VEHICLE**

(30) Priority: 02.08.2024 CN 202411061032
(71) Applicant: Xiaomi EV Technology Co., Ltd., 100176 Beijing (CN)
(72) Inventor: ZHANG, Shangfu, Beijing, 100176 (CN)
(74) Representative: Hersina, Günter

(57) **Abstract**

The present invention relates to a cell module (100), a battery pack (200) and a method for assembling the battery pack (200), and a vehicle (1000). The cell module (100) includes a plate group and a plurality of cell groups, where the plurality of the cell groups include a plurality of cells (11) arranged in a first direction, the plurality of the cell groups are arranged in a second direction, the plate group includes a plurality of end plates (30) and a plurality of side plates (20), both ends of the cell groups in the first direction are provided with the end plates (30), and the plurality of the side plates (20) include two side plates (20) arranged at both sides of the plurality of the cell groups in the second direction and at least one side plate (20) located between two adjacent cell groups, where the first direction intersects with the second direction.

## Description

### TECHNICAL FIELD

The present invention relates to the technical field of batteries, in particular to a cell module, a battery pack and a method for assembling the battery pack, and a vehicle.

### BACKGROUND OF THE INVENTION

A battery pack is a device used to provide energy to a powered device (such as a vehicle) and is a core component of the powered device. In the related art, the rigidity of the battery pack is low.

### SUMMARY OF THE INVENTION

An object of the present invention is to provide a battery pack and a powered device to at least partially solve the technical problems existing in the related art.

In order to achieve the above object, the present invention provides a cell module, including a plate group and a plurality of cell groups,
each cell group includes a plurality of cells arranged in a first direction, and the plurality of the cell groups are arranged in a second direction;
the plate group includes a plurality of end plates and a plurality of side plates, both ends of the cell groups in the first direction are provided with the end plates, and the plurality of the side plates include two side plates arranged at both sides of the plurality of the cell groups in the second direction and at least one side plate located between two adjacent cell groups; and
the first direction intersects with the second direction.

In some examples, the side plate is disposed between every two adjacent cell groups of the plurality of the cell groups.

In some examples, two of the side plates are disposed between every two adjacent cell groups of the plurality of the cell groups.

In some examples, both ends of the side plates in the first direction are adapted to abut against an inner side wall of a battery tray.

In some examples, ends of the side plates protrude from the end plates in the first direction.

In some examples, a side of the side plate in the second direction is provided with a first projection adapted to be connected to the corresponding cell group such that a gap for receiving an adhesive glue can be defined between the side and the cell group.

In some examples, both ends of the first projections respectively extend to both ends of the side plates in the first direction.

In some examples, two of the first projections are disposed on the same side of each side plate; and
the two first projections are symmetrically arranged about a center line of a height direction of the side plate in the height direction of the side plate.

In some examples, an end face of the end plate in the first direction is provided with a second projection adapted to be connected to the corresponding cell group such that a gap for receiving an adhesive glue can be defined between the end face and the cell group.

In some examples, a lower end of each side plate in a height direction is provided with a connecting portion adapted to be connected to a heat exchanging member of a battery tray.

In some examples, a lower end of the side plate in a height direction is provided with a connecting portion provided with a connecting plate extending in the second direction, and the connecting plates are adapted to be arranged between lower ends of the cell groups and a bottom plate of a battery tray.

In some examples, the side plate has an I-shaped cross-sectional shape in its own height direction.

In some examples, the side plate is provided with mounting positions, and both ends of the end plates in the second direction are provided with mounting members adapted to the mounting positions; and
the mounting members are connected to the mounting positions.

According to a second aspect of the present invention, a battery pack is provided and includes a battery tray and the cell module; and
the battery tray includes a side frame and a bottom plate, and a receiving space adapted to receive the cell module is configured between the bottom plate and the side frame.

In some examples, ends of the side plates in the first direction abut against an inner side wall of the side frame.

In some examples, the side plates vertically abut against the inner side wall of the side frame.

In some examples, the battery pack further includes reinforcement plates arranged between the side plates and the inner side wall of the side frame, the side plates abut against the inner side wall of the side frame by the reinforcement plates, and the reinforcement plates are fitted to the inner side wall of the side frame; and
an area of surfaces, configured to be fitted to the side frame, of the reinforcement plates is greater than an area of end faces of the side plates.

In some examples, an adhesive glue is filled between the side plates and the cell groups, and/or an adhesive glue is filled between two adjacent side plates.

In some examples, a filling space is formed between the end plates and an inner wall of the side frame and is adapted to be filled with a pouring sealant.

In some examples, the battery pack further includes an upper cover and a pouring sealant;
the pouring sealant is installed in the receiving space and is adapted to wrap the cell module; and
the upper cover is mounted on an upper portion of the battery tray and is adhered to the pouring sealant.

According to a third aspect of the present invention, a vehicle is provided and includes the battery pack.

According to a fourth aspect of the present invention, a method for assembling a battery pack is provided. The method includes:
providing a battery tray, a plate group and a plurality of cells, where the plate group includes a plurality of end plates and a plurality of side plates, and the battery tray has a receiving space configured to receive a cell module;
assembling the plurality of the cells into a plurality of cell groups;
respectively assembling the plurality of the side plates and the plurality of the end plates with the plurality of the cell groups adhesively into one piece to form the cell module; and
installing the cell module in the receiving space.

In some examples, assembling the plurality of the cells into the plurality of the cell groups, and respectively assembling the plurality of the side plates and the plurality of the end plates with the plurality of the cell groups adhesively into one piece include:
stacking and adhering the plurality of the cells in a first direction to form the cell groups;
respectively adhering the end plates at two opposite ends of the cell groups in the first direction to construct a first cell sub-module;
adhering the side plates at one or both ends of the cell groups in a second direction to construct second cell sub-modules; and
adhering the first cell sub-module to two of the plurality of the second cell sub-modules to construct the cell module, or adhering the plurality of the second cell sub-modules to construct the cell module;
where the first direction intersects with the second direction.

In some examples, a side of the side plate is provided with a first projection, and adhering the side plates at one or both ends of the cell groups in the second direction includes:
applying an adhesive glue to sides of the side plates in the second direction, and connecting the first projections to the cell groups so that the adhesive glue can be accommodated in a space defined between the side plates and the cell groups.

In some examples, an end face of each end plate is provided with a second projection, and adhering the end plates at both ends of the cell groups in the second direction includes:
applying an adhesive glue to end faces of the end plates in the first direction, and connecting the second projections to the cell groups so that the adhesive glue can be accommodated in a space defined between the end plates and the cell groups.

In some examples, in the process of stacking and adhering the plurality of the cells in the first direction, stacking is performed with end faces of the side plates in the first direction as reference surfaces; and
in the process of adhering the first cell sub-module to two of the plurality of the second cell sub-modules, the first cell sub-module and the second cell sub-modules are arranged in the second direction with the reference surfaces, or in the process of adhering the plurality of the second cell sub-modules, the plurality of the second cell sub-modules are arranged in the second direction with the reference surfaces.

In some examples, the battery tray includes a side frame and a bottom plate, and a receiving space adapted to receive the cell module is configured between the bottom plate and the side frame; and
installing the cell module in the receiving space includes:
adhering the cell module to the bottom plate via an adhesive glue.

In some examples, the method further includes:
providing an upper cover and a pouring sealant;
pouring the pouring sealant into the receiving space of the battery tray; and
covering an upper end of the battery tray with the upper cover, and adhering the upper cover to the pouring sealant.

By the above technical solutions, the plurality of the cells are stacked, the positions of the cells in the stacking direction are fixed by using the end plates, the positions of the plurality of the cell groups are fixed by using the plurality of the side plates, and the cell module is formed by assembling the plurality of the cell groups and the plate group, so that the positions of the plurality of the cells in the cell module can be ensured to be stabilized, i.e., the stability of fixing of the cells is improved, and thus, the stability of the cell module is improved, and then the rigidity of the cell module as a whole can be increased. Furthermore, since the side plates are disposed between the cell groups in the second direction, the number of the side plates is increased and the rigidity of the cell module as a whole can also be increased. In this way, it is advantageous to increase the rigidity of the battery pack.

Other features and advantages of the present invention will be described in detail in the subsequent Detailed Description.

### BRIEF DESCRIPTION OF DRAWINGS

The accompanying drawings are used to provide a further understanding of the present invention and constitute a part of the specification, and together with the detailed description below serve to explain the present invention, but do not constitute a limitation of the present invention.
FIG. 1 is a schematic structural diagram of various components of a battery pack according to an example of the present invention in an exploded state.
FIG. 2 is a schematic structural diagram of the battery pack according to the example of the present invention in which an electrical connection component, a pouring sealant and an upper cover are not shown.
FIG. 3 is a schematic top view of the battery pack according to the example of the present invention in which the electrical connection component, the pouring sealant and the upper cover are not shown.
FIG. 4 is an enlarged schematic view of a portion B in FIG. 3.
FIG. 5 is a schematic cross-sectional view taken along a direction A in FIG. 3.
FIG. 6 is an enlarged schematic view of a portion C in FIG. 5.
FIG. 7 is a schematic structural diagram of the battery pack according to the example of the present invention in which the pouring sealant and the upper cover are not shown.
FIG. 8 is a schematic structural diagram of a cell module according to an example of the present invention.
FIG. 9 is a schematic structural diagram of the cell module according to the example of the present invention in which a part of side plates and cells are in an exploded state.
FIG. 10 is a schematic structural diagram of a first cell sub-module according to an example of the present invention.
FIG. 11 is a schematic structural diagram of a second cell sub-module according to an example of the present invention.
FIG. 12 is a schematic front view of a side plate according to an example of the present invention.
FIG. 13 is a schematic side view of the side plate according to the example of the present invention.
FIG. 14 is a schematic front view of an end plate according to an example of the present invention.
FIG. 15 is a schematic side view of the end plate according to the example of the present invention.
FIG. 16 is a schematic flowchart of assembling a battery pack according to an example of the present invention.
FIG. 17 is a block diagram of a vehicle according to an example of the present invention.

### DETAILED DESCRIPTION OF THE INVENTION

Specific embodiments of the present invention are described in detail below with reference to the accompanying drawings. It should be understood that the specific embodiments described here are merely illustrative and explanatory of the present invention, and are not intended to limit the present invention.

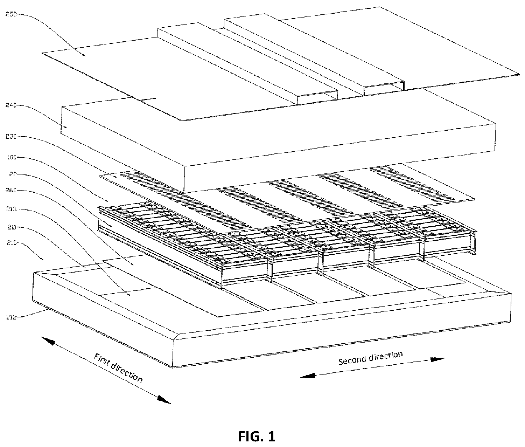

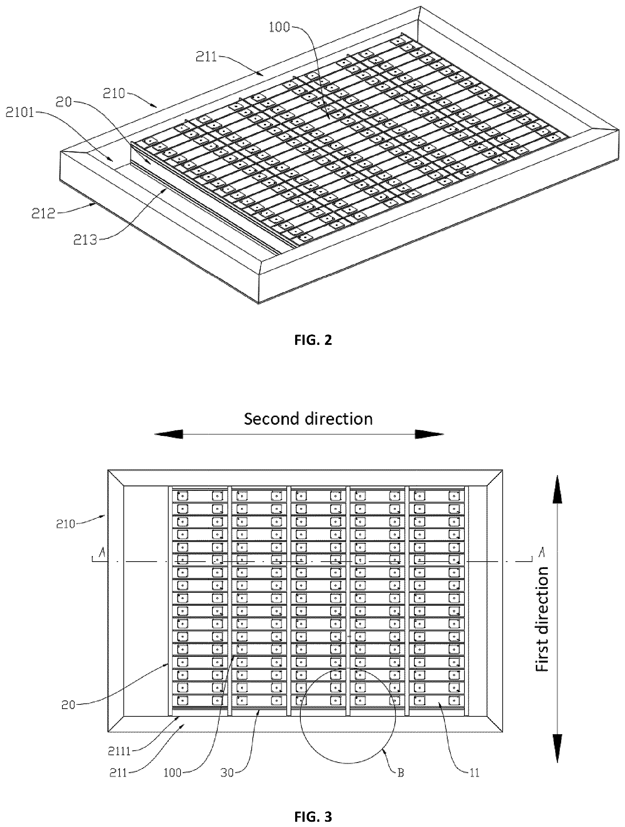

It needs to be understood in the present invention that in the present invention, unless otherwise stated, the orientation or positional relationship indicated by orientation words such as "up" and "down" is defined based on the orientations of the drawings as shown in the corresponding drawings, only for the convenience of describing the present invention and simplifying the description, rather than indicating or implying that the device or element referred to must have a specific orientation and be constructed and operated in a specific orientation, and thus should not be construed as limiting the present invention. The terms "inside and outside" may refer to the inside and outside of the corresponding structural profiles. A "first direction" and a "second direction" may refer to a first direction and a second direction shown in FIGS. 1 and 3, where as an example, the first direction may be a width direction of a vehicle body. Furthermore, it should be noted that the terms such as "first" and "second" are used to distinguish one element from another and do not have a sequence or an importance. Further, in the description with reference to the drawings, the same reference numerals in different drawings represent the same elements.

In the description of the present invention, it should also be noted that unless expressly specified and defined otherwise, the terms "disposed", "connection", "connected", and "mounted" are to be understood broadly, e.g., it may be fixed connection, detachable connection or integrated connection; and it may be direct connection or indirect connection through an intermediate medium. The specific meanings of the above terms in the present invention can be understood according to specific circumstances by those of ordinary skill in the art.

As mentioned above, a battery pack in related art, has a problem of low rigidity. One of the reasons for this problem is that fixed mounting of a plurality of cells in a cell module is not stable enough, and the rigidity of the cell module is low.

In view of this, as shown in FIGS. 1 to 15, the present invention provides a cell module 100, including a plate group 50 and a plurality of cell groups 10, the plurality of the cell groups 10 include a plurality of cells 11 arranged in a first direction, the plurality of the cell groups 10 are arranged in a second direction, the plate group 50 includes a plurality of end plates 30 and a plurality of side plates 20, both ends of the cell groups 10 in the first direction are provided with the end plates 30, and the plurality of the side plates 20 include two side plates 20 arranged at both sides of the plurality of the cell groups 10 in the second direction and at least one side plate 20 located between two adjacent cell groups 10, where the first direction intersects with the second direction.

By the above technical solutions, the plurality of the cells 11 are stacked, the positions of the cells 11 in the stacking direction are fixed by using the end plates 30, the positions of the plurality of the cell groups 10 are fixed by using the plurality of the side plates 20, and the cell module 100 is formed by assembling the plurality of the cell groups 10 and the plate group 50, so that the positions of the plurality of the cells 11 in the cell module 100 can be ensured to be stabilized, i.e., the stability of fixing of the cells 11 is improved, and thus, the stability of the cell module 100 is improved, and then the rigidity of the cell module 100 as a whole can be increased. Moreover, since the side plates 20 are disposed between the cell groups 10 in the second direction, the number of the side plates 20 is increased, and the rigidity of the cell module 100 as a whole can also be increased. In this way, it is advantageous to increase the rigidity of the battery pack.

The end plates 30 are arranged at both ends of the cell groups 10 in the first direction, the end plates 30 can limit the positions of the cells 11 in the stacking direction, i.e., the degree of freedom of the cells 11 in the first direction can be limited, improving the stability of the cells 11 in the first direction. After the plurality of the cell groups 10 are stacked, the degree of freedom of the cells 11 and the cell groups 10 in the second direction is limited by using the side plates 20, improving the stability of the cells 11 in the second direction, and the side plates 20 are arranged between the plurality of the cell groups 10, and the side plates 20 can position adjacent cells 11 between adjacent cell groups 10, improving the stability of relative positions of the cells 11 between adjacent cell groups 10, reducing misalignment of the cells 11 within the cell module 100, and improving the overall rigidity of the cell module 100 with the added side plates 20.

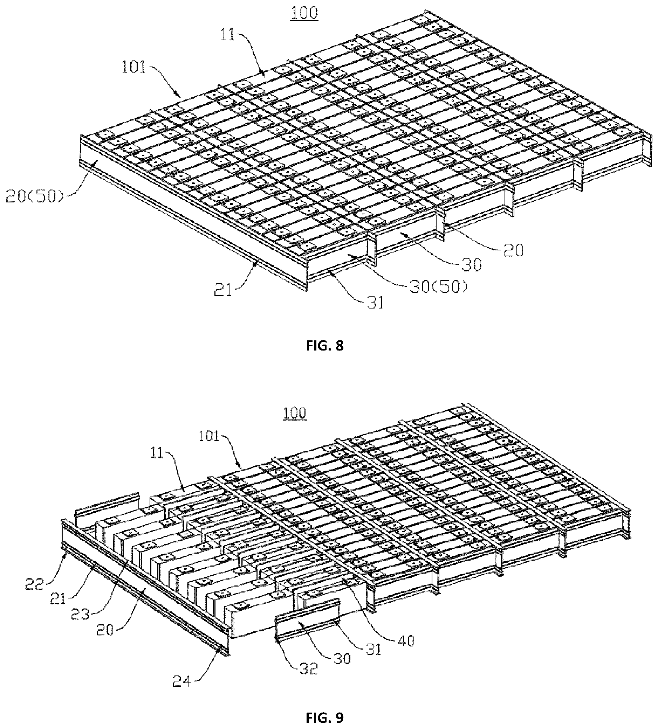

In the present invention, the first direction is a direction in which the cells 11 are stacked, and for the stacking between the cells 11, opposite stacking of large faces may be selected according to design requirements to form the cell groups 10 (as shown in FIGS. 8 to 11), or small faces are stacked, which is not limited in the present invention. The present invention will be described below by taking an example that the large faces of the cells are oppositely stacked to form the cell groups 10.

Referring to FIGS. 1 to 3, the plurality of the cells 11 are oppositely stacked in the first direction in a manner that the large faces are opposite to each other to form the cell groups 10, and the large faces of the cells 11 are perpendicular to the first direction. The cells 11 will expand during use, and the expansion force of the cells 11 intersects with the large faces and is mostly in the first direction, i.e., the expansion force of the cell groups 10 is mainly in the first direction. Referring to FIGS. 1 to 3 and the following text, after the cell module 100 is assembled into a battery tray 210 of a battery pack 200, both ends of the cell groups 10 in the first direction may be connected to a side frame 211 of the battery tray 210, for example, by using the side plates 20 and a pouring sealant 240. In this way, the side frame 211 of the battery tray 210 may be utilized as an expansion beam to absorb most of the expansion force of the cells 11, so that it is not necessary to separately add a collision beam structure for the expansion force of the cells 11, which is beneficial for saving materials and increasing the size of a receiving space 230 configured to receive the cell module 100 in the battery tray 210, facilitating the assembly of the cell module 100 with a larger volume.

It can be understood that in the present invention, the large face of the cell 11 refers to a face of the cell 11 having a relatively large area among a plurality of faces in the length direction of the battery pack, for example, the large face of the cell 11 is a face defined by sides in the length direction and the height direction of the cell 11 in an installed state in which the battery pack is installed on the bottom of a vehicle. The small face of the cell 11 is a face defined by sides in the width direction and the height direction of the cell 11.

The intersection between the second direction and the first direction may be at any suitable angle as long as the second direction is not parallel to the first direction. For example, as shown in FIG. 3, the second direction may be disposed perpendicular to the first direction. In the present invention, the number of the side plates 20 located between the plurality of the cell groups 10 is not limited, and the number of the side plates 20 between adjacent cell groups 10 can be designed according to positional stability and rigidity requirements after the cell groups 10 are stacked.

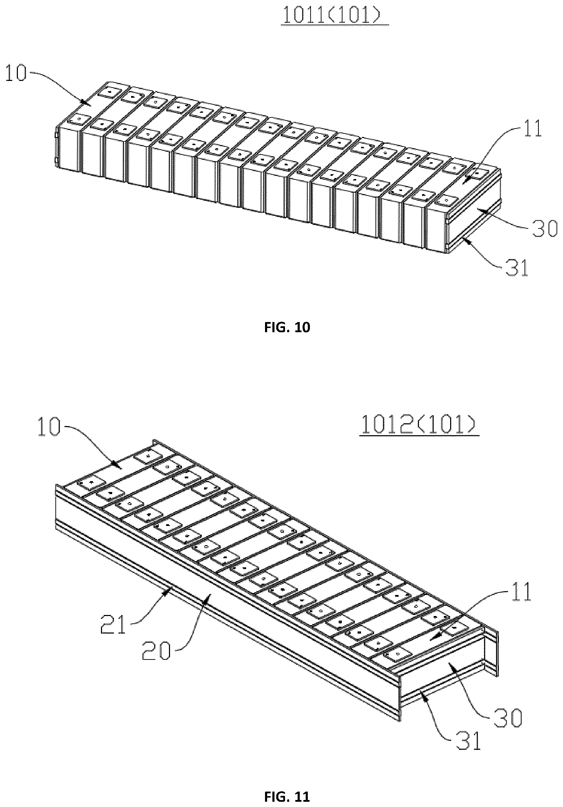

In the present invention, as shown in FIGS. 1, 8 and 9, the side plate 20 may be disposed between every two adjacent cell groups 10 of the plurality of the cell groups 10. In this way, the positions of the cells 11 of adjacent cell groups 10 in the second direction can be ensured to be stable, misalignment of the cells 11 that may be formed after impact can be reduced, and the overall rigidity of the cell module 100 can be improved. In this embodiment, a pair of the end plates 30, the cell group 10 located between the pair of the end plates 30, and the side plate 20 located at one side of the cell group 10 may constitute one cell sub-module 101, for example, a second cell sub-module 1012 as shown in FIG. 11.

In the present invention, two side plates 20 may be disposed between every two adjacent cell groups 10 of the plurality of the cell groups 10. That is, the side plates 20 are disposed on both sides of each of the cell groups 10 in the second direction, so that the positions of the cells 11 in the single cell group 10 can be fixed, and the relative stability between adjacent cell groups 10 after the plurality of the cell groups 10 are stacked can be ensured, and thus, the rigidity of the cell module 100 is improved. In this embodiment, a pair of adjacent side plates 20, the cell group 10 between the pair of the side plates 20, and a pair of associated end plates 30 may constitute one cell sub-module 101, for example, the second cell sub-module 1012 as shown in FIG. 11.

In some embodiments, depending on the rigidity requirements of the battery pack 200, a plurality (two or more) of the side plates 20 may be disposed between adjacent cell groups 10, and the arrangement of increased side plates 20 is equivalent to increasing the thickness of side plates 20 at fixed locations between adjacent cell groups 10, and thus, the rigidity of adjacent cell groups 10 is increased.

In the present invention, as shown in FIGS. 2 and 3, both ends of the side plates 20 in the first direction may be adapted to abut against an inner side wall 2101 of the battery tray 210(the inner side wall 2101 of the side frame 211 as described below), for example, directly abut against an inner side wall 2101 of the battery tray 210, or abut against the inner side wall 2101 of the battery tray 210 through an intermediate member (such as reinforcement plates 220 as described below, or connection structures constructed by the reinforcement plates 220 and the pouring sealant 240). Thus, the anti-impact ability of the battery pack 200 can be improved. Specifically, when the battery pack 200 is impacted, the impact force is transmitted to the side plates 20, and most of the impact force can be absorbed by the side plates 20, so that the influence of the impact force on the cell module 100 can be reduced, and the anti-impact ability of the battery pack 200 is improved.

In an embodiment, in which the battery pack 200 of the present invention is applied to a vehicle, when the above first direction is a width direction of a vehicle body, since ends of the side plates 20 in the first direction can abut against the inner side wall 2101 (e.g., the inner side wall 2101 of the side frame) of the battery tray 210, a force-transmitting path can be constructed in the first direction (a side direction of the vehicle body) of the battery pack 200. When the vehicle is subjected to a side collision (a collision occurs in the first direction), a force that a side wall of the battery tray 210 is subjected to can be transmitted to the side plates 20 and the other side of the battery tray, so that the overall rigidity of the battery pack 200 can be improved, particularly the side impact resistance of the battery pack 200 can be improved, and thus the effect of protecting the cell module 100 when the vehicle is subjected to the side collision is achieved.

It can be understood that in the present invention, in order to facilitate the installation of the cell module 100 in the battery tray 210, the size of the side plates 20 may be slightly smaller than the size of the receiving space configured to receive the cell module 100 in the battery tray 210 in the first direction, for example, after assembly in position, a gap between the ends of the side plates 20 in the first direction and the inner side wall of the battery tray 210 is 0.5 mm.

In the present invention, as shown in FIGS. 1, 2 and 8, the ends of the side plates 20 may protrude from the end plates 30 in the first direction. In this way, a space may be defined between the side plates 20 and the inner side wall 2101 of the battery tray 210, and the space may receive a pouring sealant 240 as described below, and the pouring sealant in the space may further fix the cells 11, improve the stability of the positions of the cells 11 in the cell groups 10, and improve the rigidity of the cell module 100.

The side plates 20 protrude from the end plates 30 to facilitate the ends of the side plates 20 to abut against the inner side wall 2101 of the battery tray 210, and at the same time, to facilitate defining of a filling space for the pouring sealant 240 between the end plates 30 and the inner side wall of the battery tray 210 to facilitate the installation and protection of the cell module 100, and at the same time, the mechanical properties and the side impact protection ability of the entire battery pack 200 can be improved.

In the present invention, as shown in FIG. 1, FIG. 6, FIG. 12 and FIG. 13, a side 201 of the side plate 20 in the second direction is provided with a first projection 21 adapted to be connected to the corresponding cell group 10 so that a gap can be defined between the side 201 and the cell group 10, and the gap is configured to receive an adhesive glue 260. In this way, a space can be reserved between the cell groups 10 and the sides 201 of the side plates 20 under the action of the first projections 21, so that the thickness of the adhesive glue 260 can be ensured, and thus, the stability of the adhesion between the side plates 20 and the cells 11 is improved, and the rigidity of the cell module 100 is improved.

The first projections 21 of the side plates 20 and the side plates 20 themselves may be adhered or integrally formed, which is not limited in the present invention. When the first projections 21 of the side plates 20 and the side plates 20 are adhered for forming, suitable materials can also be selected according to the use requirements.

In some embodiments, the first projections 21 may be disposed on the sides, facing the cells 11, of the side plates 20, for example, the side plate 20 is arranged between two cell groups 10, and if only one side plate 20 is arranged between two cell groups 10, then both sides 201 of the side plate 20 are connected with the cells 11, so both sides 201 of the side plate 20 each are provided with the first projection 21 to guarantee the thickness of the adhesive glue 260 connected between the side plates 20 and the cells 11.

For another example, if the side plates 20 are arranged on both sides in the second direction after the cell groups 10 are stacked, or between two cell groups 10, and a plurality of the side plates 20 are arranged between the two cell groups 10, and at this time, the sides of the side plates 20 need to be connected to the cells 11, the first projections 21 may be arranged on the sides facing the cells 11.

In the present invention, as shown in FIG. 8, FIG. 9, FIG. 12 and FIG. 13, both ends of the first projections 21 may respectively extend to both ends of the side plates 20 in the first direction (e.g., a length direction of the side plates 20), and both ends of the first projections 21 in the first direction may respectively extend to both ends of the side plates 20 in the first direction, thus facilitating the process production and also facilitating the adhering operation.

In the present invention, the length direction of the side plate 20 refers to the extension direction of the side plate 20 itself, i.e., a direction parallel to a long side of the side plate 20.

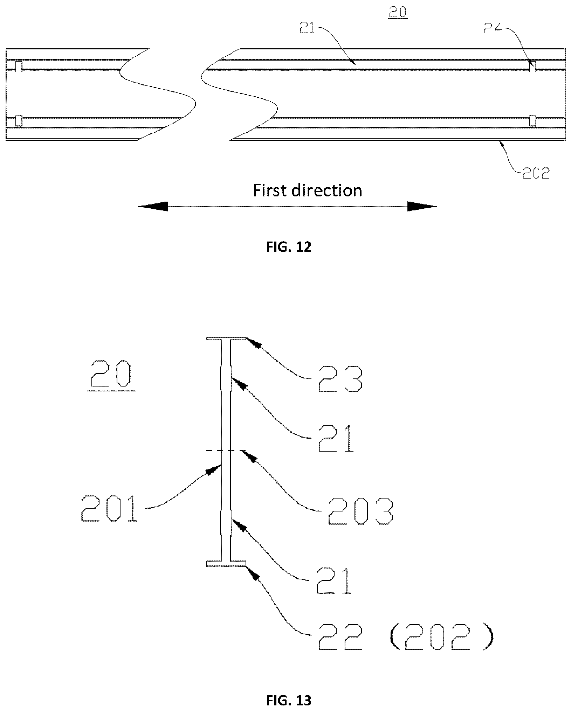

In the present invention, as shown in FIGS. 12 and 13, two first projections 21 are disposed on the same side 201 of the side plate 20, and the two first projections 21 may be symmetrically arranged about a center line 203 of the height direction of the side plate 20 in the height direction of the side plate 20. In this way, the force on the side plates 20 can be uniformly applied while facilitating processing.

In the present invention, the height direction of the side plate 20 refers to a direction parallel to a short side of the side plate 20, which is the same as the height direction of the cell module 100.

In some embodiments, a distance between one side of the first projection 21 and one side of a long side of the corresponding side plate 20 is 3 mm to 10 mm, when two first projections 21 are provided, the two first projections 21 respectively have a distance of 3 mm to 10 mm from one side of the long side of the corresponding side plate 20 close to the first projections 21, that is, the first projections 21 are arranged close to the long sides of the side plates 20, as shown in FIGS. 12 and 13, the first projections 21 located at upper parts of the drawings are arranged close to upper end faces of the side plates 20 compared with the center line in the height direction of the side plates 20 and the distance between the first projections 21 and the upper end surface may be 3mm-10mm, and the first projections 21 located at lower parts of the drawings are arranged close to lower end faces of the side plates 20 compared with the center line in the height direction of the side plates 20 and the distance between the first projections 21 and the lower end surface may be 3mm-10mm. Since the cells 11 will be deformed after use, and the middle position is deformed more seriously than the edge position, so that the first projections 21 are adhered to positions, close to edges, of the cells 11, and the influence of the force on the side plates 20 due to the deformation of the cells 11 can be reduced.

A width of the first projection 21 may be set to be 3 mm to 5 mm, and the height of the first projection 21 protruding from the side 201 of the corresponding side plate 20 may be set to be 0.3 mm to 0.8 mm, so that the thickness of the adhesive glue 260 is ensured without forming an excessive gap to loosen the connection between the side plates 20 and the cells 11.

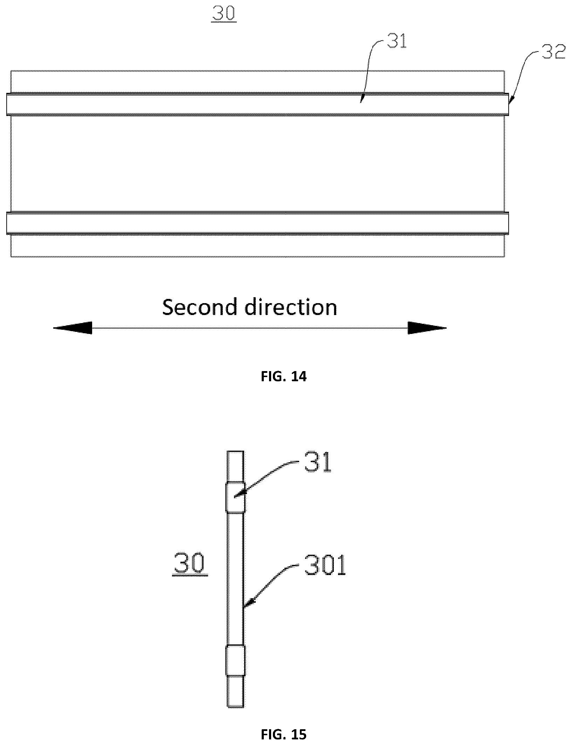

In the present invention, as shown in FIGS. 14 and 15, an end face 301 of the end plate 30 in the first direction may be provided with a second projection 31 adapted to be connected to the corresponding cell group 10 so that a gap can be defined between the end face 301 and the cell group 10, and is configured to receive the adhesive glue 260. In this way, the thickness of the adhesive glue 260 can be ensured, and thus, the stability of the adhesion between the end plates 30 and the cells 11 is improved, and the rigidity of the cell module 100 is improved.

In the present invention, as shown in FIGS. 14 and 15, two second projections 31 are disposed on the same end face 301 of the end plate 30, and the two second projections 31 may be symmetrically arranged about a center line in the height direction of the end plate 30 in the height direction of the end plate 30. In this way, the force on the end plates 30 can be uniformly applied while facilitating processing.

In the present invention, the height direction of the end plate 30 may be the same as the height direction of the cell module 100.

In some embodiments, a distance between one side of the second projection 31 and one side of a long side of the corresponding end plate 30 is 3 mm to 10 mm, when two second projections 31 are provided, the two second projections 31 respectively have a distance of 3 mm to 10 mm from one side of the long side of the corresponding end plate 30 close to the second projections 31, that is, the second projections 31 are arranged close to the long sides of the end plates 30, as shown in FIGS. 14 and 15, the second projections 31 located at upper parts of the drawings are arranged close to upper end faces of the end plates 30 compared with the center line in the height direction of the end plates 30, and the distance between the second projections 31 and the upper end surface may be 3mm-10mm and the second projections 31 located at lower parts of the drawings are arranged close to lower end faces of the end plates 30 compared with the center line in the height direction of the end plates 30 and the distance between the second projections 31 and the lower end surface may be 3mm-10mm. Since the cells 11 will be deformed after use, and the middle position is deformed more seriously than the edge position, so that the second projections 31 are adhered to positions, close to edges, of the cells 11, and the influence of the force on the end plates 30 due to the deformation of the cells 11 can be reduced.

A width of the second projection 31 may be set to be 3 mm to 5 mm, and the height of the second projection 31 protruding from the end face 301 of the corresponding end plate 30 may be set to be 0.3 mm to 0.8 mm, so that the thickness of the adhesive glue 260 is ensured without forming an excessive gap to loosen the connection between the end plates 30 and the cells 11.

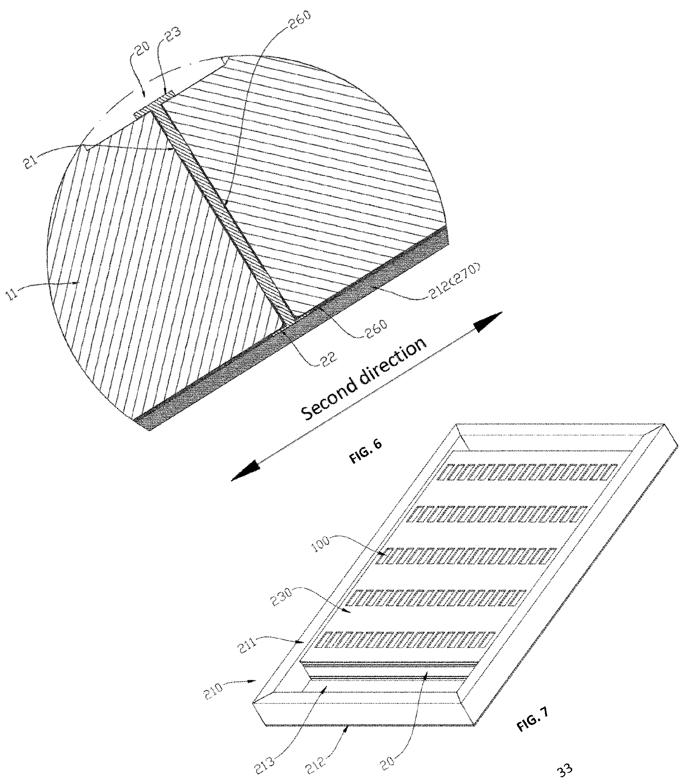

In the present invention, as shown in FIG. 6, FIG. 12 and FIG. 13, a lower end of the side plate 20 in the height direction may be provided with a connecting portion 202 adapted to be connected to a heat exchanging member 270 (It may include a bottom plate 212 of the battery tray 210) of the battery tray 210, where the heat exchanging member 270 may be a heat exchanging plate (e.g., a liquid cooling plate), so that a heat exchanging function, such as a heat dissipating function, of a heat transfer path of the cells 11 can be improved. In some embodiments, a bottom plate 212 may also be disposed as a common plate connected to lower ends of the side plates 20.

In some embodiments, the side plates 20 themselves may be heat exchange plates, such as liquid cooling plates, and in this way, the side plates 20 integrate heat exchange functions, which can simultaneously improve the anti-impact ability and rigidity of the entire battery pack 200.

In some embodiments, as shown in FIG. 9, a thermal insulation plate 40 may be disposed between adjacent cells 11, and the thermal insulation plates 40 are respectively connected (e.g., adhered) to the adjacent cells 11, improving the thermal insulation effect between the adjacent cells 11.

In the present invention, as shown in FIGS. 6 and 9, a lower end of the side plate 20 in the height direction may be provided with a connecting plate 22 extending in the second direction, and the connecting plates 22 are adapted to be disposed between the adjacent cells 11 and the bottom plate 212 of the battery tray 210. In this way, the adhesion of a contact surface between the lower ends of the side plates 20 and the bottom plate 212 can be increased to improve the stability of the connection between the side plates 20 and the bottom plate 212. Meanwhile, since the connecting plates 22 are arranged between the cells 11 and the bottom plate 212, a gap is formed between the cells 11 and the bottom plate 212, and the gap can be filled with the adhesive glue 260, and the space can ensure the thickness of the adhesive glue 260, and thus, the stability of the connection between the cells 11 and the bottom plate 212 is ensured.

In some embodiments, the connecting plates 22 may be disposed only on the sides, facing the cells 11, of the side plates 20, for example, the side plate 20 is arranged between two cell groups 10, and only one side plate 20 is arranged between two cell groups 10, the connecting plates 22 extend on both sides 201 of the side plates 20, and the connecting plates 22 are located between adjacent cells 11 and the bottom plate 212 to ensure the thickness of the adhesive glue connected between the bottom plate 212 and the cells 11. For another example, the side plates 20 are arranged on both sides of the stacked cell groups 10, or between two cell groups 10, and a plurality of the side plates 20 are arranged between the two cell groups 10, and at this time, the connecting plates 22 need to extend only on the sides of the side plates 20, and the connecting plates 22 are arranged only on the sides facing the cells 11.

In some embodiments, the thickness of the connecting plate 22 may be 0.5 mm-1 mm, while ensuring that the thickness of the adhesive glue 260, it is ensured that the adhesive glue 260 is not too thick to affect a heat dissipation path between the bottom plate 212 and the cells 11.

In the present invention, as shown in FIGS. 6, 12 and 13, the side plate 20 has an I-shaped cross-sectional shape in its own height direction. Thus, it is convenient to form the connecting plates 22 as described above, while the structure can enhance the rigidity of the side plates 20 themselves.

In some embodiments, as shown in FIGS. 6 and 13, a lower end of the side plate 20 is provided with a connecting plate 22 and an upper end of the side plate 20 can be provided with a top connecting plate 23, upper surfaces of the connecting plates 22 are in contact with lower surfaces of the cells 11, and lower surfaces of the top connecting plates 23 are in contact with upper surfaces of the cells 11, so that the overall rigidity of the cell module 100 can be enhanced.

In the present invention, as shown in FIGS. 12 to 15, the side plate 20 may be provided with mounting positions 24, and the end plates 30 may be provided with mounting members 32 adapted to the mounting positions 24 at both ends of the end plates 30 in the length direction, and the mounting members 32 are connected to the mounting positions 24. Thus, the stability of the connection between the side plates 20 and the end plates 30 can be strengthened, and thus, the stability of the fixing of the cell groups 10 and the rigidity of the cell module 100 are improved.

In some embodiments, as shown in FIGS. 12 to 15, the mounting positions 24 may be disposed as mounting holes, and the mounting members 32 may be disposed as mounting projections, and the mounting holes and the mounting projections may be adapted to be connected to facilitate the mounting and positioning between the end plates 30 and the side plates 20.

According to a second aspect of the present invention, a battery pack 200 is provided and includes a battery tray 210 and a cell module 100, the battery tray 210 includes a side frame 211 and a bottom plate 212, and a receiving space 213 adapted to receive the cell module 100 is formed between the bottom plate 212 and the side frame 211. The cell module 100 is installed in the receiving space 213.

In the present invention, as shown in FIGS. 2 and 3, in order that the side plates 20 can absorb an impact force when the battery pack 200 is impacted, ends of the side plates 20 in the length direction of the side plates 20 (i.e., the first direction) may abut against an inner side wall 2101 of the side frame 211.

In the present invention, in order to make the side plates 20 have a better ability to absorb the impact force, the side plates 20 vertically abut against the inner side wall 2101 of the side frame 211.

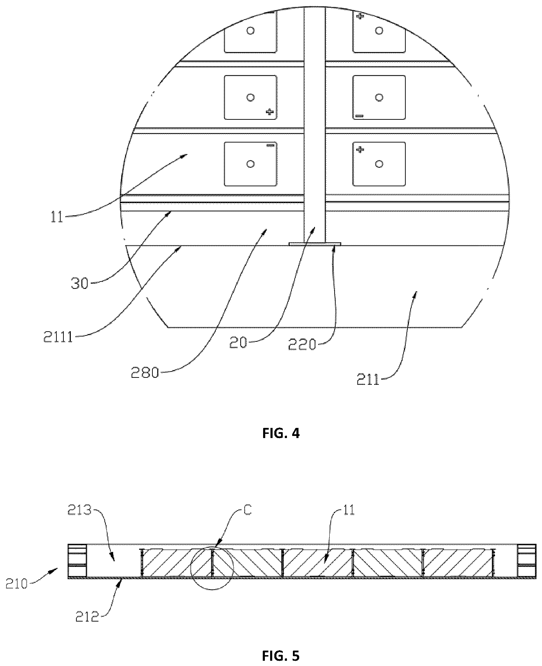

In the present invention, as shown in FIG. 4, the battery pack 200 may further include reinforcement plates 220 arranged between the side plates 20 and the inner side wall 2101 of the side frame 211, the side plates 20 abut against the inner side wall 2101 of the side frame 211 by the reinforcement plates 220, the reinforcement plates 220 are fitted to the inner side wall 2101 of the side frame 211, and an area of surfaces, configured to be fitted to the side frame 211, of the reinforcement plates 220 is greater than an area of end faces of the side plates 20.

Thus, a contact area between the side plates 20 and the inner side wall 2101 of the side frame 211 can be increased, the stability of abutment of the side plates 20 against the inner side wall of the side frame 211 can be strengthened, and a greater range of frame extrusion forces can be absorbed by the reinforcement plates 220, improving an area for absorbing the impact force.

The reinforcement plates 220 are arranged between the ends of the side plates 20 and the inner side wall 2101 of the battery tray 210, and in order to ensure the stability of the connection between the reinforcement plates 220 and the inner side wall of the battery tray 210, the reinforcement plates 220 may be adhered to the inner side wall of the battery tray 210, so that the stability of the connection between the reinforcement plates 220 and the inner side wall of the battery tray 210 is ensured. In addition, as mentioned above, in order to facilitate assembly of the cell module 100 into the battery tray 210, there may be a gap between the reinforcement plates 220 and the ends of the side plates 20, and the gap may be filled with an adhesive glue 260 or a pouring sealant 240, so that it is ensured that the ends of the side plates 20 may be connected to an inner wall of the battery tray 210 with the reinforcement plates 220.

In the present invention, an adhesive glue 260 may be filled between the side plates 20 and the cell groups 10, and/or an adhesive glue 260 may be filled between two adjacent side plates 20. In this way, the stability of the connection between the cells 11 and the side plates 20 or between two adjacent cell groups 10 can be ensured.

In the present invention, as shown in FIGS. 3 and 4, a filling space 280 may be formed between the end plates 30 and an inner side wall 2101 of the side frame 211, and is adapted to be filled with the pouring sealant 240. Thus, this portion with pouring sealant 240 having a thickness may improve the stability of the positions of the cells 11 within the cell groups 10, improving the rigidity of the cell module 100.

In the present invention, as shown in FIGS. 1 and 7, the battery pack 200 may further include an upper cover 250 and a pouring sealant 240, the pouring sealant 240 is installed in the receiving space 213 and is adapted to wrap the cell module 100, and the upper cover 250 is installed at an upper portion of the battery tray 210 and is adhered to the pouring sealant 240. Thus, the pouring sealant 240 wraps the cell module 100, fixes the position of the cell module 100 and is adhered to the upper cover 250, and adheres the cell module 100 to the upper cover 250 and the battery tray 210 into one piece, so as to increase the overall rigidity of the battery pack 200.

In the present invention, as shown in FIGS. 1 and 7, the battery pack 200 may further include an electric connection component 230 welded to upper sides of the cell groups 10 in the cell module 100, where the electric connection component 230 is welded to the plurality of the cell groups 10 while the position of the electric connection component 230 is fixed by the pouring sealant 240 to ensure reliability of connection with the cell groups 10.

The electrical connection component 230 may include a CCS (Cells Contact System), which mainly includes a signal collecting component (FPC, PCB, FFC, etc.), a plastic structural member, a copper clad aluminum busbar, etc., which are connected into a whole by a process such as hot pressing or riveting, to realize high-voltage series and parallel connection of cells, and temperature sampling and cell voltage sampling functions of batteries, providing temperature and voltage to a battery management system through FPC/PCB and a connector assembly.

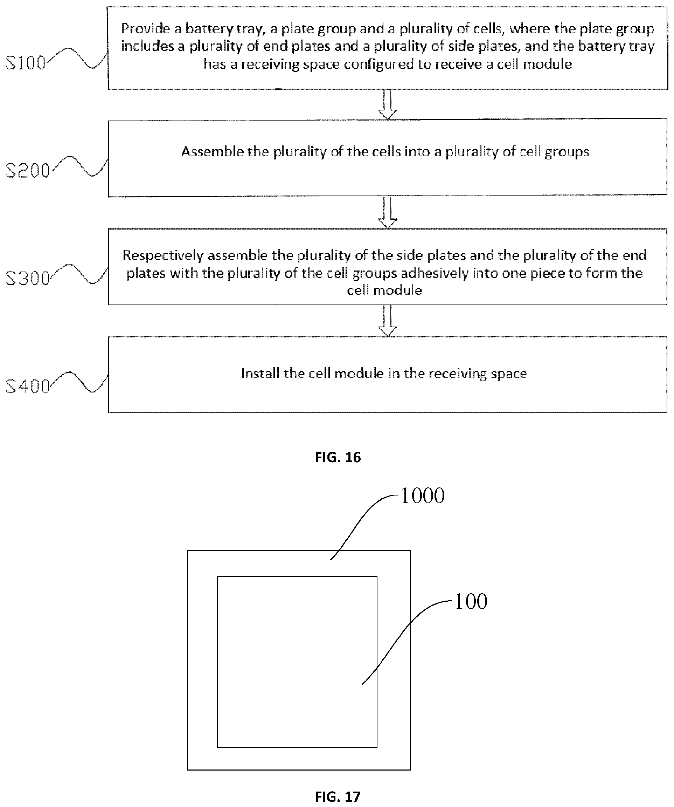

According to a third aspect of the present invention, as shown in FIGS. 17, a vehicle 1000 is provided and includes the battery pack 200.

The battery pack 200 may be mounted on a body of the vehicle 1000, and for example, may be mounted to a bottom of the body. The battery pack 200 may be arranged on the vehicle with the first direction being a width direction of the vehicle body.

According to a fourth aspect of the present invention, a method for assembling a battery pack 200 is provided. The battery pack may be the battery pack 200 mentioned above, and as shown in FIGS. 1 to 16, the method includes:
S100: providing a battery tray 210, a plate group and a plurality of cells 11, where the plate group includes a plurality of end plates 30 and a plurality of side plates 20, and the battery tray 210 has a receiving space 213 configured to receive a cell module 100;
S200: assembling the plurality of the cells 11 into a plurality of cell groups 10;
S300: respectively assembling the plurality of the side plates 20 and the plurality of the end plates 30 with the plurality of the cell groups 10 adhesively into one piece to form the cell module 100; and
S400: the cell module 100 is installed in the receiving space 213.

The plurality of the side plates 20 and the plurality of the end plates 30 are respectively assembled with the plurality of the cell groups 10 adhesively into one piece, then, narrow positions between the cells 11 have been adhered by using an adhesive glue 260, so as to effectively fill a narrow area space of an electrical connection area, a filling structure in a weak area inside the battery pack 200 is enhanced, the high-voltage creepage distance is improved, and the voltage resistance of the entire pack is improved, avoiding the need for deep glue filling due to narrow gaps between the cells 11. In this way, after the cell module 100 is installed in the battery tray 210, glue is mainly filled into areas that are easily filled with glue, such as a large space and an upper surface, so that the problem of unstable connection of the cells 11 or other components caused by inadequate glue filling in a small area is avoided. The adhesive glue 260 may be a structural glue.

Moreover, after the cell module 100 is adhered into one piece, and then placed into the receiving space 213 of the battery tray 210, it is possible to ensure that when the cell module 100 is installed in the battery tray 210, there are more vacuum suction and gripping areas, the operation is easy, and even if there is a collision during installing, the side plates 20 and the end plates 30 are collided, so that the cells 11 can be protected.

In the present invention, the plurality of the cells 11 are assembled into the plurality of the cell groups 10 is the step S200 above, and the plurality of the side plates 20 and the plurality of the end plates 30 are respectively assembled with the plurality of the cell groups 10 adhesively into one piece is the step S300 above, the step S200 and the step S300 may include: stacking and adhering the plurality of the cells 11 in the first direction to form a single cell group 10, respectively adhering the end plates 30 at two opposite ends of the cell groups 10 in the first direction to construct a first cell sub-module 1011, adhering the side plates 20 at one or both ends of the cell groups 10 in the second direction to construct second cell sub-modules 1012, adhering the first cell sub-module 1011 to two of the plurality of the second cell sub-modules 1012 to construct the cell module 100, or adhering the plurality of the second cell sub-modules 1012 to construct the cell module 100, where the first direction intersects with the second direction.

The installation of the side plates 20 and the end plates 30 as well as the cells 11 can be achieved by applying the adhesive glue 260 to the inside of the side plates 20 and the end plates 30 and adhering the side plates 20 and the end plates 30 to the peripheries of the cell groups 10, while applying a pressure toward the cell groups 10 to the opposite side plates 20 and end plates 30 in a direction perpendicular to force-receiving members (the side plates 20 and the end plates 30), and after the adhesive glue 260 is cured, a cell sub-module 101 may be constructed.

A variety of designs of the cell module 100 are included. That is, as shown in FIGS. 10, the first cell sub-module 1011 includes the cell groups 10 and two end plates 30 at both ends in the first direction, and the second cell sub-module 1012 includes the first sub-module and one or two side plates 20 added at both sides in the second direction. The design of the cell module 100 of the present invention may have a variety of configurations.

For example, firstly, a plurality of the first cell sub-modules 1011 and three second cell sub-modules 1012 may be included, the first cell sub-module 1011 is shown in FIG. 10, one side plate 20 is added only on both sides of the second cell sub-module 1012 in the second direction, and after combination in this manner, in the formed cell module 100, one side plate 20 is arranged at both ends and at the middle position (not only at the center position) of the plurality of the cell groups 10 in the second direction, and the side plates 20 are not arranged at the remaining positions. This design can fix the positions of the cells 11 while saving components.

Secondly, a plurality of the second cell sub-modules 1012 may be included, one side plate 20 is added only on both sides of the second cell sub-module in the second direction, and after combination in this manner, one side plate 20 is arranged in the cell group 10 in the second direction, so as to ensure that adjacent cells 11 are not misaligned.

Thirdly, a plurality of the second cell sub-modules 1012 may be included, the second cell sub-module 1012 is shown in FIG. 11, two side plates 20 may be added on both sides of the second cell sub-module 1012 in the second direction, and after combination in this manner, both sides of the cell group 10 in the second direction are provided with the side plates 20, so that the positions of the cells 11 within a single cell group 10 can be ensured to be fixed, while also ensuring relative stability between adjacent cell groups 10 after the plurality of the cell groups 10 are stacked.

Taking the third design as an example, the plurality of the cell sub-modules 101 may be connected by adhering the side plates 20 of adjacent cell sub-modules 101 to each other while applying a force to the side plates 20 on both sides in the second direction in a direction perpendicular to the side plates 20 subjected to the force, and the adhesive glue 260 is cured to construct an integrated cell module 100.

The pressure value of the applied force is generally controlled to be within 10000 N to ensure that the performance of the cells 11 is not affected. In particular, the number, position, cross section, etc. of the side plates 20 can be flexibly adjusted to meet the side impact requirements of the entire pack.

In the present invention, a side 201 of the side plate 20 is provided with a first projection 21, and adhering the side plates 20 at one or both ends of the cell groups 10 in the first direction includes applying an adhesive glue 260 to the sides 201 of the side plates 20, and connecting the first projections 21 to the cell groups 10 so that the adhesive glue 260 can be accommodated in a gap defined between the side plates 20 and the cell groups 10.

In the present invention, an end face 301 of the end plate 30 is provided with a second projection 31, and adhering the end plates 30 on both ends of the cell groups 10 in the first direction includes applying an adhesive glue 260 to the end faces 301 of the end plates 30, and connecting the second projections 31 to the cell groups 10 so that the adhesive glue 260 can be accommodated in a gap defined between the end plates 30 and the cell groups 10.

In this way, the thickness of the adhesive glue 260 can be ensured, and the stability of the adhesion between the side plates 20 and the cells 11 and between the end plates 30 and the cells 11 is improved, and thus, the rigidity of the cell module 100 is improved.

In the present invention, in the process of stacking and adhering the plurality of the cells 11 in the first direction, stacking is performed with the end faces of the side plates 20 in the first direction as reference surfaces, and in the process of adhering the first cell sub-module to two of the plurality of the second cell sub-modules, the first cell sub-module and the second cell sub-modules are arranged in the second direction with the reference surfaces, or in the process of adhering the plurality of the second cell sub-modules, the plurality of the second cell sub-modules are arranged in the second direction with the reference surfaces. With uniform reference to the assembly reference, the relative position dimensions of the cells 11 can be ensured.

In the present invention, the battery tray 210 includes a side frame 211 and a bottom plate 212, a receiving space 213 adapted to receive the cell module 100 is formed between the bottom plate 212 and the side frame 211, the cell module 100 is installed in the receiving space 213, and an adhesive glue 260 is disposed between the cell module 100 and the bottom plate 212.

In the present invention, the above method may further include: providing an upper cover 250 and a pouring sealant 240, pouring the pouring sealant 240 into the receiving space 213 of the battery tray 210, covering an upper end of the battery tray 210 with the upper cover 250, and adhering the upper cover 250 to the pouring sealant 240. Connecting the internal structural members of the battery pack 200 to high-strength structures such as an side frame 211 and the upper cover 250 as a whole increases the rigidity of the whole battery pack 200.

In some examples of the present invention, before the upper end of the battery tray 210 is covered with the upper cover 250, the method may further include welding an electrical connection component 230 to an upper side of the cell module 100, so that electrical connection and sampling of the cells 11 such as the electrical connection component 230 are performed after the cell module 100 is installed in the battery tray 210, and damage to weak areas such as a module sampling area can be prevented when the cells 11 are installed.

The electrical connection component 230 may include the above-mentioned CCS, which will not be repeated here.

The upper cover 250 may be a structure of sheet metal, a liquid cooling plate, a composite material, or the like, and the battery tray 210 may be an aluminum tailor-welded part, cast aluminum, a sheet metal stamping part or an injection molding part, or the like, which is not limited in the present invention.

The side plates 20 may be a plastic (polyurethane) pultruded product having better mechanical properties in the side impact direction by fiber pultrusion. If the above material is selected, the following effects can be achieved:

The tensile strength (X) that can be achieved is as follows: X is 1000 Mpa or more when the temperature is less than or equal to -40°C, X is 1000 Mpa or more when the temperature is - 40°C to 85°C; and X is 800 Mpa or more when the temperature is greater than or equal to 85°C.

The elastic modulus (Y) that can be achieved is as follows: Y is 45 Gpa or more when the temperature is less than or equal to -40°C; Y is 45 Gpa or more when the temperature is -40°C to 85°C, and Y is 40 Gpa or more when the temperature is greater than or equal to 85°C.

The flexural modulus (Z) that can be achieved is as follows: Z is 45 Gpa or more when the temperature is less than or equal to -40°C, and Z is 45 Gpa or more when the temperature is - 40°C to 85 °C; and Z is 40 Gpa or more when the temperature is greater than or equal to 85°C.

Preferred embodiments of the present invention are described in detail above in conjunction with the accompanying drawings, however, the present invention is not limited to the specific details in the above embodiments, many simple variations can be made to the technical solutions of the present invention within the scope of the technical idea of the present invention, and these simple variations all belong to the protection scope of the present invention.

It should be further noted that the specific features described in the above detailed description can be combined in any suitable manner without contradiction, and in order to avoid unnecessary repetitions, various possible combination modes are not described any more in the present invention.

In addition, any combination may be made between various embodiments of the present invention, as long as the combination does not depart from the idea of the present invention, and the combinations should also be regarded as the contents disclosed by the present invention.

## Claims

1. A cell module (100), comprising:
a plurality of cell groups (10), each of the plurality of cell groups (10) comprises a plurality of cells (11) arranged in a first direction, and the plurality of the cell groups (10) are arranged in a second direction; and
a plate group (50) comprising a plurality of end plates (30) and a plurality of side plates (20),
wherein both ends of each of the plurality of cell groups (10) in the first direction are provided with the end plates (30),
wherein the plurality of the side plates (20) comprise two side plates (20) arranged at both sides of each of the plurality of the cell groups (10) in the second direction and at least one side plate (20) located between two adjacent cell groups (10), and
wherein the first direction intersects with the second direction.

2. The cell module (100) according to claim 1, wherein a side plate (20) is between every two adjacent cell groups (10) of the plurality of the cell groups (10);
optionally, wherein two of the side plates (20) are between every two adjacent cell groups (10) of the plurality of the cell groups (10).

3. The cell module (100) according to claim 1 or 2, wherein, in the first direction, both ends of each of the plurality of side plates (20) abut against an inner side wall (2101) of a battery tray (210).

4. The cell module (100) according to any one of claims 1-3, wherein in the first direction, ends of each of the plurality of side plates (20) protrude from the end plates.

5. The cell module (100) according to any one of claims 1-4, wherein a side (201) of at least one side plate (20) of the plurality of side plates (20) in the second direction comprises a first projection (21) to connect to a corresponding cell group (10) such that a gap for receiving an adhesive glue is defined between the side (201) and the corresponding cell group (10);
optionally, wherein both ends of the first projections (21) respectively extend to both ends of the side plates (20) in the first direction;
optionally, wherein the side (201) of the at least one side plate (20) has two of the first projections (21), and
the two first projections (201) are symmetrically about a center line (203) of a height direction of the at least one side plate (20) in a height direction of the side plate (20).

6. The cell module (100) according to any one of claims 1-5, wherein an end face (301) of at least one of the plurality of end plates (30) in the first direction comprises a second projection (31) to connect to a corresponding cell group (20) such that a gap for receiving an adhesive glue can be defined between the end face (301) and the corresponding cell group (10).
optionally, wherein a lower end of at least one of the plurality of side plates (20) in a height direction comprises a connecting portion (202) to connect to a heat exchanging member (207) of a battery tray (210).

7. The cell module (100) according to any one of claims 1-6, wherein a lower end of each of the plurality of side plates (20) in a height direction comprises a connecting portion (202) provided with a connecting plate (22) extending in the second direction, and each of a plurality of connecting plates (22) are arranged between lower ends of the plurality of cell groups (10) and a bottom plate (212) of a battery tray (210).

8. The cell module (100) according to any one of claims 1-7, wherein at least one of the plurality of side plates (20) has an I-shaped cross-sectional shape in its own height direction.

9. The cell module (100) according to any one of claims 1-8, wherein the plurality of side plates are provided with mounting positions, and both ends of each of the plurality of end plates in the second direction are provided with mounting members adapted to the mounting positions, and the mounting members are connected to the mounting positions.

10. A battery pack (200), comprising a battery tray (210) and the cell module (100) according to any one of claims 1-9, wherein
the battery tray (210) comprises a side frame (211) and a bottom plate (212), and a receiving space (213) adapted to receive the cell module (100) is between the bottom plate (212) and the side frame (21).

11. The battery pack (200) according to claim 10, wherein an adhesive glue (260) is filled between the side plates (20) and the cell groups (10), and/or an adhesive glue (260) is filled between two adjacent side plates (20);
optionally, wherein a filling space (280) is between the end plates (30) and an inner side wall (2101) of the side frame (211) and is adapted to be filled with a pouring sealant (240);
optionally, the battery pack (200) further comprising an upper cover (250) and a pouring sealant (240), wherein the pouring sealant (240) is installed in the receiving space (213) and is adapted to wrap the cell module (100), and the upper cover (250) is mounted on an upper portion of the battery tray (210) and is adhered to the pouring sealant (240).

12. The battery pack (200) according to claim 10 or 11, wherein both ends of the plurality of side plates (200) in the first direction abut against an inner side wall (2101) of the side frame (211);
optionally, wherein each of the plurality of side plates (20) vertically abut against the inner side wall (2101) of the side frame.;
optionally, the battery pack further comprising reinforcement plates (220) arranged between the plurality of side plates (20) and the inner side wall (2101) of the side frame, wherein the plurality of side plates (20) abuts against the inner side wall (2101) of the side frame (211) by the reinforcement plates (220), and the reinforcement plates (220) are fitted to the inner side wall (2101) of the side frame (211); and
an area of surfaces, be fitted to the side frame (211), of the reinforcement plates (220) is greater than an area of end faces of the plurality of side plates (20).

13. A vehicle (1000), comprising a battery pack (200) according to any one of claims 10-12.

14. A method for assembling a battery pack (200), comprising:
providing (S100) a battery tray (211), a plate group (50) and a plurality of cells (11), wherein the plate group (50) comprises a plurality of end plates (30) and a plurality of side plates (20), and
the battery tray (210) has a receiving space (213) configured to receive a cell module (100);
assembling (S200) the plurality of the cells (11) into a plurality of cell groups (10);
respectively assembling (S300) the plurality of the side plates (20) and the plurality of the end plates (30) with the plurality of the cell groups (10) adhesively into one piece to form the cell module (211); and
installing (S400) the cell module (100) in the receiving space (213).

15. The method according to claim 14, wherein assembling the plurality of the cells (11) into the plurality of the cell groups (10), and respectively assembling the plurality of the side plates (20) and the plurality of the end plates (30) with the plurality of the cell groups (10) adhesively into one piece comprises:
stacking and adhering the plurality of the cells (11) in a first direction to form the plurality of cell groups (10);
respectively adhering each of the plurality of end plates (20) at two opposite ends of each of the plurality of cell groups (10) in the first direction to construct a first cell sub-module (1011);
adhering each of the plurality of side plates (20) at one or both ends of each of the plurality of cell groups (10) in a second direction to construct a plurality of second cell sub-modules (1012); and
adhering the first cell sub-module (1011) to two of the plurality of the second cell sub-modules (1011) to construct the cell module (100), or adhering the plurality of the second cell sub-modules (1012) to construct the cell module, and
wherein the first direction intersects with the second direction;
optionally, wherein a side (201) of each of the plurality of side plates (20) is provided with a first projection (21), and adhering the plurality of side plates (20) at one or both ends of the cell groups (10) in the second direction comprises:
applying an adhesive glue (260) to the side of each of the plurality of side plates (20) in the second direction, and connecting the first projection (21) to the plurality of cell groups (10) so that the adhesive glue (260) is accommodated in a space defined between the plurality of side plates (20) and the plurality of cell groups (10);
optionally, wherein an end face (301) of each of the plurality of end plates (30) is provided with a second projection (31), and adhering the plurality of end plates (30) at both ends of the cell groups (10) in the first direction comprises:
applying an adhesive glue (260) to the end face (301) of each of the plurality of end plates (30) in the first direction, and connecting the second projections (31) to the plurality of cell groups (10) so that the adhesive glue (260) is accommodated in a space defined between the plurality of end plates (30) and the plurality of cell groups (10);
optionally, wherein in the process of stacking and adhering the plurality of the cells (11) in the first direction, stacking is performed with end faces of the side plates (20) in the first direction as reference surfaces; and
in the process of adhering the first cell sub-module (1011) to two of the plurality of the second cell sub-modules (1012), the first cell sub-module (1011) and the second cell sub-modules (1012) are arranged in the second direction with the reference surfaces, or in the process of adhering the plurality of the second cell sub-modules (1012), the plurality of the second cell sub-modules (1012) are arranged in the second direction with the reference surfaces;
optionally, wherein the battery tray (210) comprises a side frame (211) and a bottom plate (212), and a receiving space (213) adapted to receive the cell module (100) is between the bottom plate (212) and the side frame (211); and
installing the cell module (100) in the receiving space (213) comprises:
adhering the cell module (100) to the bottom plate (212) via an adhesive glue (260);
optionally, the method further comprising:
providing an upper cover (211) and a pouring sealant (240);
pouring the pouring sealant (240) into the receiving space (230) of the battery tray (210); and
covering an upper end of the battery tray (210) with the upper cover (250), and adhering the upper cover (250) to the pouring sealant (240).
